# FASCICULE DE BREVET EUROPEEN

(11) **EP 2 583 762 B1**
(45) Date de publication et mention de la délivrance du brevet: **19.11.2014**
(21) Numéro de dépôt: 12186656.0
(22) Date de dépôt: 28.09.2012
(51) Int. Cl.: B09B 1/00, E02D 31/00, C09K 17/52, C09K 17/20

(54) **Procédé de couverture temporaire de sols contaminés**
Verfahren zur vorübergehenden Abdeckung von kontaminierten Böden
Method for temporary covering of contaminated soil

(30) Priorité: 21.10.2011 FR 1159548
(43) Date de publication de la demande: 24.04.2013
(73) Titulaire: EURO-TEC, 69124 Colombier-Saugnieu (FR)
(72) Inventeur: Lignier, Christophe, 69007 Lyon (FR); Casez, Hervé, 69480 Pommiers (FR); Delheur, Stéphane, 42680 Saint Marcellin en Forez (FR)
(74) Mandataire: Denjean, Eric

(56) Documents cités:
- WO-A1-02/46551
- DE-A1- 4 000 653
- DE-A1- 19 701 325

## Description

### Domaine technique de l'invention

La présente invention concerne le domaine de la protection ou le confinement de sols contaminés, comme par exemple les opérations de dépollution de sites industriels suite à leur exploitation, cessation d'activité, déconstruction ou suite à un accident industriel. La législation ICPE (Installation Classée Pour l'Environnement) ainsi que contraintes environnementales obligent les industriels à dépolluer leurs sites avant leur cession ou leur changement d'usage.

Le bénéfice recherché d'un confinement est double : la protection du sol et la protection de l'air. Tout d'abord, il s'agit de protéger le sol en limitant au maximum la propagation des contaminants présents à la surface du sol vers les couches plus profondes par l'effet de percolation des eaux météoriques, de leur pénétration dans le sol et de leur capacité à entrainer les contaminants vers les nappes souterraines. Dans le même temps, il est nécessaire d'empêcher l'évaporation des contaminants volatils, comme par exemple les composés organiques volatils (COV) dans l'atmosphère, ainsi que des poussières nocives ou toxiques.

Les contaminants de l'environnement sont des substances qui, lorsqu'elles sont introduites accidentellement ou délibérément dans l'environnement, peuvent causer des dommages à l'homme, à la faune et à la flore. On peut citer par exemple les hydrocarbures, les métaux lourds les PCB, les produits phytosanitaires, les microbes, bactéries et virus, les pollutions radioactives, les huiles, les dioxines et les COV.

### Art antérieur

Les solutions actuelles de confinement des sols se font généralement par bâchages. L'opération consiste à poser et à maintenir sur le sol des bâches et/ou des géo membranes. Généralement, la technique utilise deux éléments essentiels, que sont d'une part le feutre anti-poinçonnement, qui permet de « gommer » les éléments pouvant détériorer par perforation la partie supérieure et d'autre part, la bâche en toile avec enduction de type PVC afin d'assurer une étanchéité sur les zones recouvertes.

Le bâchage de confinement est une solution fastidieuse et difficile dans sa mise en oeuvre. Elle nécessite le remplissage de sac de lestage, la mise en place du feutre, le positionnement des sacs de lestage, l'entretien des bâches qui peuvent être déplacées, froissées, repliées par les événements climatiques (pluie, vent) et le traitement des bâches polluées en fin de travaux qui sont considérées comme déchets et doivent être évacuées dans une filière agréée (généralement centre de stockages de déchets non dangereux ou dangereux).

Cette maintenance est indispensable et coûteuse car elle nécessite la présence quasi-permanente d'un personnel formé et agréé pour ajuster les bâches et repositionner les sacs de lestage et pomper l'eau souvent accumulée qui ne peut pas être évacuée sur le site même. Cette technique présente aussi les désavantages suivants : le bâchage est particulièrement difficile à mettre en oeuvre sur les talus, et l'étanchéité recherchée n'est pas optimum du fait de la non continuité des bâches et donc de leur mauvais recouvrement et ainsi du risque de fuite de liquides ou de gaz pouvant traverser à travers le confinement.

D'autres solutions ont été envisagées.

Le document DE 19 701 325 décrit une protection temporaire ou permanente comprenant successivement une couche, au contact du sol, contenant des solides insolubles dans l'eau et aptes à gonfler au contact de l'eau (polysaccharides, polypeptides...) et un film externe à base de polymère hydrophobe (polyuréthane...).

Le document DE 40 00 653 divulgue une structure destinée à protéger le sol. Cette structure comprend successivement une couche textile (polypropylène ou polyéthylène moyenne densité) et une couche de mousse.

Le document FR 2 127 991 décrit un procédé de protection des sols pollués consistant à mélanger un liant avec la terre de surface (les 15 premiers cm), à compacter à l'aide d'engin de travaux publics et à appliquer une couche mince de polymère insoluble dans l'eau, de type polyuréthanne pour obtenir un effet imperméabilisant de la couche supérieure.

Cette technique présente l'inconvénient de nécessiter de nombreuses interventions car il est nécessaire de mélanger la terre avec le liant, puis de compacter l'ensemble avant d'appliquer la deuxième couche. Un autre inconvénient de cette méthode est la formation de poches d'eau à la surface de la couche imperméabilisante qui peuvent détruire la protection et par effet de percolation polluer le terrain plus en profondeur.

Le document WO 97/34054 décrit une méthode pour protéger les sols contre la contamination causée par le stockage de container consistant en 3 étapes : l'application sur le sol d'une couche à base de smectite (argile) et de polymère, puis l'application d'une couche de drainage à base de silicate (sable, gravier), et enfin l'application d'une couche à base de particules minérales imprégnées d'huile. Cette méthode est complexe et a l'inconvénient de positionner la couche imperméabilisante au contact de l'atmosphère.
La demande WO98/31770 décrit une protection, permanente de préférence, consistant en deux couches : un primaire contenant des particules insolubles dans l'eau qui gonfle dans l'eau au contact du sol, et un film polymère "water-repellant", i.e. hydrophobe en surface. Le même problème de poches d'eau se pose avec les mêmes conséquences.

### Problème technique à résoudre

Aucune de ces solutions n'apportent une performance suffisante en terme de protection temporaire de sols contaminés qui soit facile à mettre en oeuvre, facile d'entretien et facilement dégradable.

Il existe donc un besoin d'une méthode de protection temporaire de sols contaminés plus performante et plus facile à mettre en oeuvre.

### Description de l'invention

La présente invention se propose de palier aux problèmes ci-dessus mentionnés.

La présente invention propose un nouveau procédé de couverture temporaire de sols contaminés grâce à une membrane composés d'une première couche, sur le sol, d'étanchéité ou imperméabilisante à base de polymère hydrosoluble, et d'une deuxième couche stabilisante, au contact de l'atmosphère, permettant une protection mécanique, ladite couche stabilisante étant à base de fibres végétales.

Plus précisément, l'invention a pour objet un procédé de couverture temporaire de sols contaminés consistant à appliquer sur le sol, tout d'abord une couche étanche à base de polymère hydrosoluble, puis ensuite, une couche stabilisante à base de fibres végétales.

### Couche étanche ou imperméabilisante

La première couche appliquée sur le sol a un rôle imperméabilisant : elle permet de créer une barrière aux gaz et fluides en protégeant donc l'atmosphère des contaminants volatils du sol et en protégeant le sol d'un effet de percolation.

La couche étanche ou imperméabilisante contient avantageusement :
- de 0.05 à 3 % en poids d'au moins un polymère hydrosoluble,
- de 0.05 à 4% en poids d'un composé filmogène ;
- de 0.001 à 2 % en poids d'un agent réticulant comportant au moins 2 fonctions aldéhydes ;
- le complément à 100% en poids d'eau.

La couche imperméabilisante peut en outre contenir :
- jusqu'à 3% massique d'au moins un polymère épaississant ;
- jusqu'à 3 % massique d'un correcteur de pH ;
- jusqu'à 3 % massique de fibres synthétiques de taille allant de 1 à 500µ ;
- jusqu'à 0.5% massique d'un agent complexant ;
- des tensioactifs, des gommes naturelles de type guar, des xanthates, de la carboxyméthylcellulose.

Le polymère hydrosoluble présent systématiquement dans la couche étanche peut se présenter sous forme solide ou liquide et est obtenu à partir :
- d'au moins un monomère non ionique comme par exemple ceux choisis dans le groupe comprenant l'acrylamide, le methacrylamide, le N-vinylméthylacétamide ou le N-vinylformamide, l'acétate de vinyle, la vinylpyrrolidone, le methacrylate de méthyle, le diméthylacrylamide, l'acryloyl morpholine ou d'autres esters acryliques, ou d'autres esters à insaturation éthylénique, ou encore d'autres monomères vinyliques insolubles dans l'eau comme le styrène ou l'acrylonitrile,
- éventuellement copolymérisé avec un ou plusieurs monomères cationiques choisis dans le groupe comprenant les sels de diallyldialkyl ammonium comme le chlorure de diallyl dimethyl ammonium (DADMAC) et encore les acrylates et methacrylates de dialkylaminoalkyle, en particulier l'acrylate de dialkylaminoéthyle (ADAME) et le méthacrylate de dialkylaminoéthyle (MADAME), ainsi que leurs sels acidifiés ou quaternisés par les moyens connus de l'homme de métier, comme le chlorure de benzyle, le chlorure de méthyle (MeCI), les chlorures d'aryle, d'alkyle, le diméthylsulfate, le diéthylsulfate et encore les dialkyl- aminoalkylacrylamides ou - methacrylamides, ainsi que leurs sels acidifiés ou quaternisés de manière connue, par exemple le methacrylamido-propyl triméthyl ammonium chlorure (MAPTAC), les produits de Mannich comme les dialkylaminométhylacrylamides quaternisés.
- éventuellement copolymérisé avec un ou plusieurs monomères anioniques comme par exemple les monomères possédant une fonction carboxylique (ex: acide acrylique, acide methacrylique, et leurs sels...), les monomères possédant une fonction acide sulfonique (ex: acide 2-acrylamido- 2-méthylpropane sulfonique (AMPS) et leurs sels...), les acides vinyl sulfoniques, le méthacrylate d'éthylène glycol phosphate.

Le polymère hydrosoluble sera de préférence sous forme d'émulsion inverse. De préférence le polymère sera non ionique et son poids moléculaire supérieur à 1 millions de g/mol.

Le composé filmogène sera par exemple une dispersion latex comprenant un polymère ou copolymère obtenu à partir de monomères styréniques et/ou buténiques, et/ou acryliques, et/ou vinyliques.

L'agent réticulant comportant au moins 2 fonctions aldéhydes pourra être par exemple le formaldéhyde et de préférence le glyoxal.

Dans les composants pouvant être ajoutés dans la couche imperméabilisante, le polymère épaississant pourra être naturel ou synthétique, liquide ou solide. De préférence il sera un polymère à base d'acrylamide et réticulé différent du polymère hydrosoluble déjà mentionné.

Le correcteur de pH pourra être tout composé basique ou acide permettant d'ajuster le pH de la composition de la couche imperméabilisante, de préférence il s'agira de la soude.

Les fibres synthétiques seront de préférence des fibres de polypropylène.

L'agent complexant sera de préférence basé sur les composés suivants : le penta acétate de diéthylenetriamine pentasodium, l'EDTA ( éthylenediamine tetra acetique acid) ou le NTA (N-(hydroxyethyl)-ethylenediaminetriacetic acid).

La couche imperméabilisante est appliquée à l'état liquide sur le sol à traiter, de préférence par pulvérisation, à une épaisseur comprise entre 1 et 50 mm, de préférence entre 2 et 10 mm.

Selon l'invention, la couche étanche est appliquée sur le sol à l'état liquide et gélifie sous l'action de l'agent réticulant. Pour éviter la gélification de la composition avant application, l'agent réticulant est ajouté à la composition constitutive de la couche d'étanchéité, juste avant application. Un équipement de type hydroseedeur^{®} sera préférentiellement utilisé afin de réaliser l'application.

### Couche stabilisante

La deuxième couche appliquée sur la couche étanche et en contact avec la surface a pour rôle de stabiliser la membrane, d'absorber les eaux météoriques sans créer des poches, d'absorber les chocs dont ceux entre autres provoqués par la chute de gouttes de pluie ou de grêlons. Elle permet d'éviter les ruissellements d'eau. Elle a aussi pour but de protéger la couche imperméabilisante contenant le(s) polymère(s) hydrosolubles car ceux-ci peuvent être dégradés par les UV, la température et l'oxydation en présence d'ions métalliques.

La couche stabilisatrice contient avantageusement :
- de 5 à 30 % massique de fibres végétales,
- de 5 à 15% massique de liant hydraulique,
- le complément à 100% en poids d'eau.

La couche stabilisatrice peut en outre contenir :
- jusqu'à 5 % massique de fluidifiant organique comme par exemple un polymère hydrosoluble à base d'acrylamide, de la lécithine, des composés siliconés, de la gomme guar, des extrait d'algues l'extrait de cyamopsis tetragonoloba et d'algues rouges, dont le rôle est de faciliter l'application par pulvérisation et l'écoulement dans les tuyaux,
- jusqu'à 15 % massique de fibres de polymère, par exemple des fibres de polyester ou de viscose, ou de polyéthylène, ou d'aramide, permettant d'améliorer la résistance à la traction et au poinçonnement ;
- de gélifiants, de carboxyméthylcellulose ou d'autres gomme guars, d' écorces, de fibres de coco, de paille, de charges minérales comme de la bentonite, de la smectite, du talc, du kaolin.

Par l'expression " liants hydrauliques ", on entend selon la présente invention tout composé ayant la propriété de s'hydrater en présence d'eau et dont l'hydratation permet d'obtenir une structure ayant une résistance mécanique. On citera comme exemple de liant hydraulique, les ciments, les plâtres, les argiles et tous les liants à base de gypsum.

Les fibres végétales sont des fibres principalement composée de cellulose, et/ou d'hémicéllulose, et/ou de lignines et/ou de pectines. Préférentiellement ce seront des fibres de bois obtenu par défibrage mécanique avec traitement thermique sous pression. Les essences de bois principalement utilisés seront *Pinus, Betula payrefera* /*Populus tremuloides* sans que cela ne soit limitatif.
Cette deuxième couche sera appliquée à l'état liquide, avantageusement par projection hydraulique, c'est-à-dire par pulvérisation. Un équipement de type hydroseeder^{®} sera mis en oeuvre pour l'application.

La deuxième couche est appliquée à une épaisseur comprise entre 1 et 50 mm, de préférence de 3 et 10 mm. L'épaisseur de la couche végétale pourra varier en fonction des indices de pluviométrie. Dans une région à forte pluviométrie, l'épaisseur sera plus importante.

Par couverture temporaire on entend une protection pendant une période pouvant aller de 1 jour à 2 ans, préférentiellement de 1 semaine à 6 mois.

Préférentiellement les couches sont appliquées par pulvérisation à l'aide par exemple de lance. Les équipements de type hydroseeders^{®}, équipé d'un malaxeur à pâles sont les plus adéquats à ce type d'application. Ils ont une facilité de remplissage, d'application soit par pulvérisation depuis le camion soit au sol par des tuyaux trainés, de nettoyage. Les marques les plus répandues sont EUROSEEDER^{®} / FINN^{®} / SCHEIER^{®} / BOWIE^{®}, bien d'autres équipements soient également disponibles sur le marché.

Ce mode d'application permet d'appliquer les couches y compris sur des terrains en pente ou accidenté. Lorsque la pente sera supérieure à 20%, il pourra être ajouté à même le sol et avant d'appliquer la première couche un géotextile synthétique ou végétal, par exemple à base de fibres de coco. Elle permettra sur les talus pentus, de former une armature souple qui facilitera le maintien des couches appliquées.

Le sol contaminé à traiter ne nécessite pas de traitement particulier. Néanmoins, si sa configuration présente des aspérités ou autres particularités, il pourra être envisagé un nivellement-damage à l'aide d'engins prévus à cet effet.

Le procédé selon l'invention a un intérêt tout particulier dans les applications suivantes :
- couvertures provisoires de sols pollués, stockés en tas ou non sur site, qui nécessitent d'être recouverts parce qu'émetteurs de polluants volatils, de polluants solubles et/ou de poussières nocives ou toxiques, ayant un impact sur l'air et sur les eaux ;
- couvertures provisoires de zones en attente d'excavation ;
- couvertures d'andains de terres (ou terrils) soumises à une dépollution biologique par voie microbienne (impliquant l'une ou (et) l'autre phase) ;
- Paillage artificiel ;
- encapsulation d'herbicide de contact dans la couche spongieuse (Lutte contre les plantes envahissantes) ;
- couvertures provisoires pour limiter les émanations de gaz et d'odeurs ;
- couverture quotidienne de CET, de terrils de charbons.

Le procédé selon l'invention peut aussi avoir un intérêt pour d'autres applications comme la couverture de terrils de charbons ou d'autres matériaux minéraux ou organiques sous formes de particules solides.

Dans un mode de réalisation particulier, on applique sur la couche stabilisante, au moins une couche végétale.

Dans un autre mode de réalisation, on applique sur la couche stabilisante, au moins deux couches successives, respectivement au moins couche étanche puis une couche végétale.

Dans les deux cas, cette opération de protection supplémentaire a l'avantage de ne nécessiter aucune opération supplémentaire avant de réappliquer au moins une couche.

L'association d'une couche imperméabilisante et d'une couche végétale permet de manière simple d'obtenir d'excellentes performances d'étanchéité des liquides et des gaz en limitant au maximum la propagation des contaminants présents à la surface du sol vers les couches plus profondes et d'empêcher l'évaporation des contaminants volatils comme les COV dans l'atmosphère, ainsi que des poussières nocives ou toxiques.

La mise en oeuvre du procédé est simplifiée car la membrane n'est composée que de deux couches et elle l'est particulièrement lorsque ces deux couches sont appliquées par pulvérisation.

L'utilisation du procédé est aussi simplifiée car il est applicable sur tout type de sols et de toute morphologie, y compris sur les parties en pentes comme les talus. De plus il ne nécessite aucune maintenance particulière et ne nécessite donc pas d'intervention pendant tout la durée de l'encapsulation.
La destruction en fin de travaux de la membrane est simplifiée car la membrane ne nécessite pas de traitement des déchets particuliers autres que ceux prévus initialement pour traiter le sol contaminé.

Les exemples ci-après permettent d'illustrer l'invention, mais n'ont aucun caractère limitatif.

### Exemple

Les essais sont réalisés sur un site industriel d'une superficie de 2ha environ ayant connu au fil des années de multiples modifications et connu divers incidents (Feu / Bombardements 2^{ème} guerre mondiale, explosion, exploitation industrielle).

L'actuel chantier de dépollution des sols nécessite la mise en oeuvre de moyens de confinements temporaires des zones polluées par des COV (Composants Organiques volatils).

Les essais consistent à comparer l'efficacité des protections temporaires sur cette zone identifiée comme polluées en COVs et à suivre dans le temps les teneurs en COVs présentes en surfaces de l'emprise couverte.

### Solution de l'art antérieur : bâchage

Cette solution dite de l'art antérieur mise en place comme témoin comprend la pose sur le sol d'un complexe constitué par une géo membrane épaisse (5/10^{ème}), elle-même protégée du sol par un géotextile de densité 500g/m². Le complexe est maintenu par des sacs lestés.

### Solution selon l'invention

A l'aide d'un hydroseedeur^{®} on applique à même le sol, successivement les deux couches suivantes de compositions détaillées ci-dessous :
1. la couche imperméabilisante est appliquée à une épaisseur de 2 mm et a la composition suivante (% massique)
   - eau 98.06%
   - Emulsion inverse de copolymère acrylamide / acide acrylique,
      30% anionique de poids moléculaire de 10 millions de g/mol 0.77 %
   - Floset S44 (composé filmogène) 0.97 %
   - soude 0.1N 0.10 %
   - Glyoxal 0.10 %
2. la couche stabilisatrice est appliquée à une épaisseur de 5 mm et a la composition suivante (% massique)
   - eau 93.53%
   - mulch 5.16%
   - polyacrylamide linéaire 0.02%
   - du gypsum 1.29 %

Le mulch est composé de fibres de bois obtenues par défibrage mécanique avec traitement thermique sous pression dont les essences de bois sont le *Pinus, Betula payrefera* /*Populus tremuloides*

Après un état initial servant de point zéro de l'état de dégazage du sous sol, des mesures comparées visant à démontrer l'étanchéité et l'efficacité des matériels de confinement sont réalisées sur une période de un mois. Au cours de ces essais, le relevé des paramètres environnementaux et des observations sur le vieillissement des membranes fibrillaires complète les analyses réalisées lors des tests (mesures à large spectre permettant de déterminer la présence des différents COV en provenance du sol pollué).

Le passage ou non des COV au travers des différentes membranes :
· Indique ou non l'efficacité du principe d'encapsulage à empêcher les COV issus du dégazage des sols vers l'atmosphère;
· Révèle ou non la capacité des procédés mis en oeuvre de limiter la pénétration des eaux météoriques dans les sols.

Les mesures de terrain relatives aux essais réalisés sur membranes fibrillaires ont réalisées à l'aide d'un détecteur à gaz par photo-ionisation ou PID (Photovac 2020 ). Ce matériel permet de caractériser et de mesurer les composés organiques volatils (COV), de manière quantitative. Il est équipé d'une lampe UV à spectre large (10.6 eV), adaptée à la mesure de l'ensemble des composés organiques volatils, notamment les composés organochlorés et les BTEX.

Sur le site, les produits sont présents sous la forme d'un mélange essentiellement constitué par :
· Des Composés Organiques Halogénés Volatils (COHV);
· Du Benzène, de l'Ethyl benzène, du Toluène et des Xylènes (BTEX);
· Des hydrocarbures linéaires volatils;
· Des aldéhydes.

Les mesures sont exprimées en ppm. Elles sont réalisées deux fois par semaine en surface des deux confinements, aux endroits qui auront été préalablement repérés à l'aide d'un marquage. L'appareil de mesure est disposé au dessus du point à mesure, dans une chambre de mesure constituée par un flacon en PE ouvert au fond.

### Résultats

Aucune émanation de COV n'a été détectée au-dessus des deux protections durant toute la période de test, ce qui confirme l'excellente efficacité de protection de la protection selon l'invention. Celle-ci a en plus pour avantage par rapport à la protection de l'art antérieur :
- d'être plus facile à mettre en oeuvre
- d'être facile d'entretien car il n'y a pas de maintenance quotidienne en cas de vent.

Par ailleurs, d'autres essais ont permis de mettre en évidence la fuite de COV dans les zones de recouvrement entre les bâches de la protection de l'art antérieur. Le procédé selon l'invention permet donc une protection optimisée.

Enfin des essais réalisés sur des talus ont permis de mettre en évidence la facilité de mise en oeuvre sur des terrains pentus du procédé de l'invention et son efficacité puisqu'aucune détection de COV n'a été observée.

Enfin, la protection selon l'invention a montré tout son intérêt lors des orages survenus lors de la période d'essais puisque la couche stabilisatrice a joué son rôle d'amortisseur des chocs liés à la chute des gouttes et absorbeur d'eau ; accumulation d'eau n'a été observée.

## Revendications

1. Procédé de couverture temporaire de sols contaminés consistant à appliquer sur le sol, tout d'abord une couche étanche à base de polymère hydrosoluble, puis ensuite une couche stabilisante à base de fibres végétales.

2. Procédé selon la revendication 1, **caractérisé en ce que** la couche étanche contient:
- de 0.05 à 3 % en poids d'au moins un polymère hydrosoluble,
- de 0.05 à 4% en poids d'un composé filmogène, avantageusement un polymère ou copolymère obtenu à partir de monomères styréniques et/ou buténiques, et/ou acryliques, et/ou vinyliques.
- de 0.001 à 2 % en poids d'un agent réticulant comportant au moins 2 fonctions aldéhydes, avantageusement du glyoxal,
- le complément à 100% en poids d'eau.

3. Procédé selon l'une des revendications précédentes, **caractérisé en ce que** le polymère hydrosoluble est obtenu à partir :
- d'au moins un monomère non ionique choisi dans le groupe comprenant l'acrylamide, le methacrylamide, le N-vinylméthylacétamide ou le N-vinylformamide, l'acétate de vinyle, la vinylpyrrolidone, le methacrylate de méthyle, le diméthylacrylamide, l'acryloyl morpholine, le styrène ou l'acrylonitrile,
- éventuellement copolymérisé avec un ou plusieurs monomères cationiques choisis dans le groupe comprenant les sels de diallyldialkyl ammonium tel que le chlorure de diallyl dimethyl ammonium (DADMAC), les methacrylates de dialkylaminoalkyle, tels que l'acrylate de dialkylaminoéthyle (ADAME) et le méthacrylate de dialkylaminoéthyle (MADAME), ainsi que leurs sels acidifiés ou quaternisés, tels que le chlorure de benzyle, le chlorure de méthyle (MeCI), les chlorures d'aryle, d'alkyle, le diméthylsulfate, le diéthylsulfate et encore les dialkyl-aminoalkylacrylamides ou - methacrylamides, ainsi que leurs sels acidifiés ou quaternisés, tel que le methacrylamido-propyl triméthyl ammonium chlorure (MAPTAC) et les produits de Mannich tels que les dialkylaminométhylacrylamides quaternisés.
- éventuellement copolymérisé avec un ou plusieurs monomères anioniques tels que les monomères possédant une fonction carboxylique, les monomères possédant une fonction acide sulfonique, les acides vinyl sulfoniques, le méthacrylate d'éthylène glycol phosphate.

4. Procédé selon l'une des revendications précédentes, **caractérisé en ce que** le polymère hydrosoluble est non ionique, de poids moléculaire supérieur à 1 million de g/mol et se présente sous la forme d'une émulsion inverse.

5. Procédé selon l'une des revendications précédentes, **caractérisé en ce que** la couche étanche est appliquée à l'état liquide sur le sol à traiter à une épaisseur comprise entre 1 et 50 mm, de préférence entre 2 à 10 mm.

6. Procédé selon l'une des revendications précédentes, **caractérisé en ce que** la couche stabilisatrice contient :
- de 5 à 30 % massique de fibres végétales,
- de 5 à 15% massique de liant hydraulique,
- le complément à 100% en poids d'eau.

7. Procédé selon la revendication 6, **caractérisé en ce que** le liant hydraulique est choisi dans le groupe comprenant les ciments, les plâtres, les argiles et tous les liants à base de gypsum.

8. Procédé selon l'une des revendications précédentes, **caractérisé en ce que** la couche stabilisante est appliquée à l'état liquide sur la couche étanche à une épaisseur comprise entre 1 à 50 mm, de préférence de 3 à 10 mm.

9. Procédé selon l'une des revendications précédentes, **caractérisé en ce que** les couches sont appliquées par pulvérisation.

10. Procédé selon l'une des revendications précédentes, **caractérisé en ce que**, préalablement à l'application de la couche étanche, on applique sur le sol un géotextile synthétique ou végétal, avantageusement à base de fibres de coco.

## Patentansprüche

1. Verfahren zum temporären Abdecken kontaminierter Böden, das darin besteht, auf den Boden zunächst eine dichte Schicht auf Basis von wasserlöslichem Polymer und dann eine stabilisierende Schicht auf Basis von Pflanzenfasern aufzubringen.

2. Verfahren nach Anspruch 1, **dadurch gekennzeichnet, dass** die dichte Schicht enthält:
- 0,05 bis 3 Gew.-% mindestens eines wasserlöslichen Polymers,
- 0,05 bis 4 Gew.-% einer Filmbildnerzusammensetzung, vorteilhafter Weise ein Polymer oder Copolymer, das aus Styrol- und/oder Buten- und/oder Acryl- und/oder Vinylmonomeren gewonnen ist,
- 0,001 bis 2 Gew.-% eines Vernetzungsmittels, das mindestens 2 Aldehydgruppen, vorteilhafter Weise Glyoxal umfasst,
- als Ergänzung auf 100 Gew.-% Wasser.

3. Verfahren nach einem der vorhergehenden Ansprüche, **dadurch gekennzeichnet, dass** das wasserlösliche Polymer gewonnen wird aus:
- mindestens einem nicht ionischen Monomer, das aus der Gruppe ausgewählt ist, die Acrylamid, Methacrylamid, N-Vinylmethylacetamid oder N-Vinylformamid, Vinylacetat, Vinylpyrrolidon, Methylmethacrylat, Dimethylacrylamid, Morpholinacryloyl, Styrol oder Acrylnitril umfasst,
- gegebenenfalls copolymerisiert mit einem oder mehreren kationischen Monomer/en, das/die aus der Gruppe ausgewählt ist/sind, die Diallyldialkylammoniumsalze wie etwa Diallyldimethylammoniumchlorid (DADMAC), Dialkylaminoalkylmethacrylate wie etwa Dialkylaminoethylacrylat (ADAME) und Dialkylaminoethylmethacrylat (MADAME) sowie deren angesäuerte oder quaternisierte Salze wie etwa Benzylchlorid, Methylchlorid (MeCl), Aryl-, Alkylchloride, Dimethylsulfat, Diethylsulfat und noch Dialkylaminoalkylacrylamide oder - methacrylamide sowie deren angesäuerte oder quaternisierte Salze wie etwa Methacrylamidpropyltrimethylammoniumchlorid (MAPTAC) und Mannich-Produkte wie etwa quaternisierte Dialkylaminomethylacrylamide umfasst,
- und gegebenenfalls copolymerisiert mit einem oder mehreren anionischen Monomer/en, das/die eine Carboxylgruppe besitzt/besitzen, wobei die Monomere eine Sulfonsäuregruppe, Vinylsulfonsäuren, Ethylenglycolphosphatmethacrylat besitzen.

4. Verfahren nach einem der vorhergehenden Ansprüche, **dadurch gekennzeichnet, dass** das wasserlösliche Polymer nicht ionisch, von einem Molekulargewicht von über 1 Million g/mol ist, und sich in Form einer Umkehremulsion darstellt.

5. Verfahren nach einem der vorhergehenden Ansprüche, **dadurch gekennzeichnet, dass** die dichte Schicht im flüssigen Zustand auf den zu behandelnden Boden in einer Dicke von 1 bis 50 mm, vorzugsweise von 2 bis 10 mm aufgebracht wird.

6. Verfahren nach einem der vorhergehenden Ansprüche, **dadurch gekennzeichnet, dass** die stabilisierende Schicht enthält:
- 5 bis 30 Massen-% Pflanzenfasern,
- 5 bis 15 Massen-% hydraulisches Bindemittel,
- als Ergänzung auf 100 Gew.-% Wasser.

7. Verfahren nach Anspruch 6, **dadurch gekennzeichnet, dass** das hydraulische Bindemittel aus der Gruppe ausgewählt ist, die Zement, Gips, Ton und alle Bindemittel auf Gipskalkbasis umfasst.

8. Verfahren nach einem der vorhergehenden Ansprüche, **dadurch gekennzeichnet, dass** die stabilisierende Schicht im flüssigen Zustand auf die dichte Schicht in einer Dicke von 1 bis 50 mm, vorzugsweise 3 bis 10 mm aufgebracht wird.

9. Verfahren nach einem der vorhergehenden Ansprüche, **dadurch gekennzeichnet, dass** die Schichten durch Zerstäubung aufgebracht werden.

10. Verfahren nach einem der vorhergehenden Ansprüche, **dadurch gekennzeichnet, dass** vor dem Aufbringen der dichten Schicht, auf den Boden ein synthetisches oder pflanzliches Geotextil, vorteilhafter Weise auf Basis von Kokosfasern, aufgebracht wird.

## Claims

1. A process for the temporary covering of contaminated soils, consisting in applying, to the soil, first of all a leakproof layer based on a water-soluble polymer, and then subsequently a stabilizing layer based on plant fibers.

2. The process as claimed in claim 1, wherein the leakproof layer contains:
- from 0.05 to 3% by weight of at least one water-soluble polymer,
- from 0.05 to 4% by weight of a film-forming compound, advantageously a polymer or copolymer obtained from styrene and/or butene and/or acrylic and/or vinyl monomers;
- from 0.001 to 2% by weight of a crosslinking agent comprising at least 2 aldehyde functions, advantageously glyoxal;
- the remainder to 100% by weight being water.

3. The process as claimed in one of the preceding claims, wherein the water-soluble polymer is obtained from:
- at least one nonionic monomer chosen from the group comprising acrylamide, methacrylamide, N-vinylmethylacetamide or N-vinylformamide, vinyl acetate, vinylpyrrolidone, methyl methacrylate, dimethylacrylamide, acryloyl morpholine, styrene or acrylonitrile;
- optionally copolymerized with one or more cationic monomers chosen from the group comprising diallyldialkylammonium salts, such as diallyldimethylammonium chloride (DADMAC), dialkylaminoalkyl methacrylates, such as dialkylaminoethyl acrylate (ADAME) and dialkylaminoethyl methacrylate (MADAME), and also the acidified or quaternized salts thereof, such as benzyl chloride, methyl chloride (MeCl), aryl chlorides, alkyl chlorides, dimethyl sulfate, diethyl sulfate and dialkyl-aminoalkylacrylamides or -methacrylamides, and also the acidified or quaternized salts thereof, such as methacrylamidopropyltrimethylammonium chloride (MAPTAC) and the Mannich products such as quaternized dialkylamino-methylacrylamides;
- optionally copolymerized with one or more anionic monomers, such as monomers having a carboxylic function, monomers having a sulfonic acid function, vinylsulfonic acids, and ethylene glycol methacrylate phosphate.

4. The process as claimed in one of the preceding claims, wherein the water-soluble polymer is nonionic, has a molecular weight of greater than 1 million g/mol and is in the form of an inverse emulsion.

5. The process as claimed in one of the preceding claims, wherein the leakproof layer is applied in the liquid state to the soil to be treated at a thickness of between 1 and 50 mm, preferably between 2 and 10 mm.

6. The process as claimed in one of the preceding claims, wherein the stabilizing layer contains:
- from 5 to 30% by weight of plant fibers,
- from 5 to 15% by weight of hydraulic binder,
- the remainder to 100% by weight being water.

7. The process as claimed in claim 6, wherein the hydraulic binder is chosen from the group comprising cements, plasters, clays and all gypsum-based binders.

8. The process as claimed in one of the preceding claims, wherein the stabilizing layer is applied in the liquid state to the leakproof layer at a thickness of between 1 and 50 mm, preferably from 3 to 10 mm.

9. The process as claimed in one of the preceding claims, wherein the layers are applied by spraying.

10. The process as claimed in one of the preceding claims, wherein, prior to the application of the leakproof layer, a synthetic or plant geotextile, advantageously based on coconut fibers, is applied to the soil.
